Europäisches Patentamt

(19) European Patent Office

Office européen des brevets

(11) Publication number: **0 029 290**
**B1**

(12) **EUROPEAN PATENT SPECIFICATION**

(45) Date of publication of patent specification: **11.01.84**

(51) Int. Cl.³: **F 16 H 47/08**

(21) Application number: **80303368.7**

(22) Date of filing: **25.09.80**

(54) Transmission controls.

(30) Priority: **16.11.79 US 94692**

(43) Date of publication of application:
**27.05.81 Bulletin 81/21**

(45) Publication of the grant of the patent:
**11.01.84 Bulletin 84/2**

(84) Designated Contracting States:
**DE FR GB**

(56) References cited:
**DE - A - 1 550 977**
**DE - A - 1 650 929**
**DE - A - 1 807 745**
**DE - A - 2 224 647**
**FR - A - 2 374 569**
**GB - A - 1 208 193**
**GB - A - 1 212 951**
**GB - A - 2 017 842**
**US - A - 2 351 553**
**US - A - 3 053 116**
**US - A - 3 505 907**
**US - A - 3 719 093**
**US - A - 3 861 241**
**US - A - 4 056 019**

(73) Proprietor: **GENERAL MOTORS CORPORATION**
**General Motors Building 3044 West Grand**
**Boulevard**
**Detroit Michigan 48202 (US)**

(72) Inventor: **Duhaime, Michael Leo**
**23450 Margareta**
**Redford, Michigan 48219 (US)**

(74) Representative: **Haines, Arthur Donald et al,**
**GM Patent Section Luton Office (F6) P.O. Box No.**
**3 Kimpton Road**
**Luton, Beds. LU2 OSY (GB)**

Courier Press, Leamington Spa, England.

Transmission controls

This invention relates to transmission control mechanisms, in particular hydraulic control mechanisms for automatic transmissions.

With a view to providing improved transmission efficiency and thereby improving the fuel economy of vehicles, it is possible to utilize a torque converter clutch which is engageable to directly couple together the input and output members of a hydrodynamic torque converter (or of a fluid coupling), thereby eliminating the inefficiency arising from hydraulic slip in the device. It is considered that the torque converter clutch must be engaged for more than one gear ratio to obtain maximum benefit from such a device, and accordingly, in a four-speed transmission, the torque converter clutch would be engaged at least in the third and fourth gear ratios, and preferably also in the second ratio.

When a downshift is made from the highest ratio to a lower ratio of a ratio-change transmission, it is desirable to disengage the torque converter clutch momentarily during the ratio change to permit the shift energy to be accommodated by the torque converter rather than by the mechnical drive connection provided by the torque converter clutch.

By the present invention there is provided a transmission control for a first friction drive-establishing means controlled by an electrically-operated solenoid valve, and a second friction drive-establishing means controlled by a hydraulically-operated shift valve, comprising a control valve having a differential-area valve spool slidably disposed in a stepped valve bore, a passage means interconnecting the hydraulically operated shift valve and the differential area of the valve spool, a restricted exhaust connected to the passage means, and pressure-responsive electrical switch means connected to the passage means upstream of the restricted exhaust and pressure-actuable to cause the solenoid valve to effect disengagement of the first friction drive-establishing means, the passage means being effective to provide, in co-operation with the valve spool and the restricted exhaust, a controlled pressure outlet for the second drive-establishing means such that on disengagement of the second drive-establishing means the pressure in the passage means is initially increased sufficiently to actuate the switch means and after a predetermined time the pressure in the passage means is reduced by way of the restricted exhaust to permit the switch means to return to an unactuated condition for re-engagement of the first friction drive-establishing means.

The control provided by the present invention thus permits the desired momentary disengagement of a torque converter-clutch to occur during downshift of a power transmission, and a like control can be utilized in other forms of power transmission wherein it is desirable to momentarily disengage a drive-establishing device such as a clutch or brake during a ratio interchange and to subsequently re-engage the device upon completion of the ratio change.

In a preferred form of control in accordance with the present invention, a solenoid-controlled torque converter clutch is momentarily disengaged during a ratio interchange in the power transmission by controlling the exhaust pressure of an off-going friction device in such a manner as to actuate a pressure-responsive electrical switch which controls the solenoid to momentarily disengage the torque converter clutch during the ratio interchange.

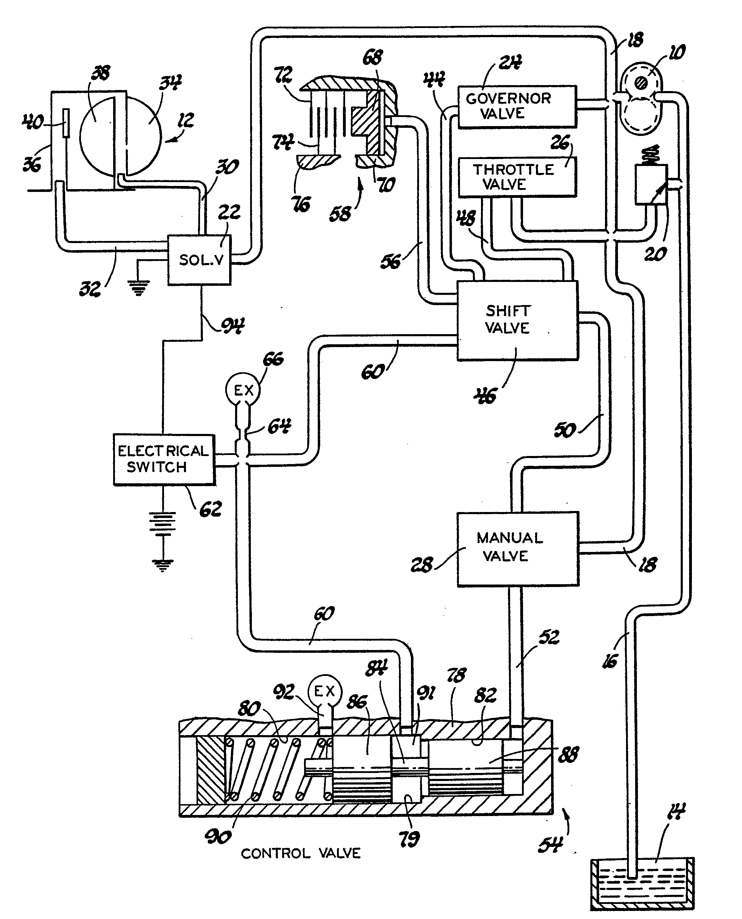

The accompanying drawing is a diagrammatic representation of one embodiment of a transmission control in accordance with the present invention.

In the drawing, there is shown a conventional gear pump 10 which is driven in conventional manner by a conventional hydrodynamic torque converter 12 to supply high pressure fluid to a hydraulic control system. The pump 10 takes in fluid from a reservoir 14 through a passage 16, and delivers the fluid at a high pressure to a passage 18. The maximum fluid pressure in the passage 18 is established by a conventional pressure regulator valve 20 which returns excess fluid to the passage 16. The passage 18 is connected to a solenoid valve 22, a governor valve 24, a throttle valve 26 and a manual control valve 28. The solenoid valve 22 is a conventional solenoid-actuated valve which is operative to supply fluid pressure from the passage 18 either to a fluid passage 30 or to a fluid passage 32, depending on the electrical condition of the solenoid, with the passage not being pressurized being connected to exhaust. The passages 30 and 32 are each connected to the torque converter 12.

The torque converter 12 has an impeller 34 which is driven by an input shell 36, and a turbine 38 which is effective to drive planetary gearing in a transmission, not shown, in a conventional manner. Drive connections between torque converters and planetary gearing arrangements are well-known, and are illustrated, so far as concerns the present invention, for example by the drive connection shown in United States Patent 3,724,292 (Borman) or United States Patent 3,321,056 (Winchell et al).

Also incorporated within the torque converter 12 is a torque converter clutch (lock-up clutch) 40, which may be constructed similarly to the torque converter clutch shown in United States Patent 3,252,352 (General et al).

The fluid passage 30 is connected to direct fluid to the torque converter 12 in such a manner as to engage the torque converter clutch 40, and the fluid passage 32 is connected to direct fluid to the torque converter 12 in such a manner as to disengage the torque converter clutch 40. Such fluid connections are shown in the abovementioned US—A—3,252,352, and similar control systems can be seen in United States Patent 3,730,315 (Annis et al), and United States Patent 3,693,478 (Malloy).

The governor valve 24 may be constructed similarly to the governor valve shown in United States Patent 3,559,667 (Koivunen) or may comprise one of the well-known governor valve structures. The throttle valve 26 may comprise any of the well-known throttle valves, or may be constructed similarly to the throttle valve shown in United States Patent 3,893,472 (Schuster). The governor valve 24 generates a pressure signal, proportional to vehicle speed, which is delivered to a fluid passage 44. The passage 44 is connected to a conventional shift valve 46, which may be constructed similarly to the three-four shift valve shown in the aforementioned United States Patent 3,724,292. The throttle valve 26 generates a pressure signal, proportional to throttle position, which is delivered through a passage 48 to the shift valve 46.

The manual control valve 28 may be constructed in accordance with any of the well-known hydraulic manual valves utilized in power transmissions. The manual control valve 28 is effective to distribute pressure from the passage 18 either to a passage 50 connected to the shift valve 46, or to a passage 52 connected to a pressure control valve 54, depending on the drive ratio selected by the operator. If an automatic drive sequence is selected by the operator, the passage 50 will be pressurized and the passage 52 will be exhausted. If a manual drive range is selected, (for example the low or intermediate ratio in a three-speed transmission), the passage 52 is pressurized.

The shift valve 46 has an outlet passage 56 connected to a friction device 58, and an exhaust passage 60 which is connected to the control valve 54, to a pressure-responsive electrical switch 62, and by way of a flow restriction 64 to an exhaust port 66. As is well-known with transmission shift valves, when the governor pressure in the passage 44 is sufficient to overcome the effect of throttle pressure in the passage 48, the shift valve 46 will upshift and provide a fluid connection between the passage 50 and the passage 56 which will be effective to engage the friction device 58. In the event that the relationship between governor pressure and throttle pressure changes sufficiently to permit the shift valve 46 to downshift, the passage 56 will be connected to the exhaust passage 60.

The friction device 58 is a conventional fluid-operated friction device having a piston 68 slidably disposed in a housing 70 and a plurality of interleaved friction plates 72 and 74 alternate plates of which are connected respectively to the housing 70 and to a hub 76 in known manner. When the passage 56 is pressurized, the piston 68 enforces engagement of the friction discs 72 and 74, thereby providing a friction connection between the housing 70 and the hub 76. If the friction device 58 is a clutch member it will thereby provide a rotary drive, in known manner, and if the friction device is a brake it will function as a stationary reaction member, likewise in known manner.

The pressure control valve 54 includes a housing 78 having a stepped bore 79 with a large-diameter portion 80 and a small-diameter portion 82, with a spool valve 84 slidably disposed in the stepped bore 79. The spool valve 84 has a large land 86 co-operating with the large-diameter portion 80 of the bore, and small-diameter land 88 co-operating with the small-diameter portion 82 of the bore. A compression spring 80 is operative to bias the valve spool 84 rightwardly in the bore 79 as shown.

The fluid passage 52 is connected to the small-diameter portion 82 of the bore, and is effective to supply fluid pressure to the righthand end face of the land 88. The exhaust passage 60 is connected to the housing 78 so as to supply fluid to a differential-area chamber 91 formed in the bore 79 between the lands 86 and 88. An exhaust 92 is connected to the large-diameter portion 80 of the bore. When the passage 52 is pressurized, the valve spool 84 will move leftwardly against the bias of the spring 90 to provide unrestricted fluid communication between the exhaust passage 60 and the exhaust 92 in the space provided by the differential area of the valve lands. This will occur when the operator selects some drive ratio other than automatic drive, as described above.

The exhaust passage 60 will be pressurized whenever an automatic ratio interchange occurs within the transmission involving the disengagement of the friction device 58, inasmuch as during the disengagement of the friction device 58 the volume of fluid required to maintain the piston 68 actuated is exhausted through the passage 60. The resulting fluid pressure in the exhaust passage 60 is effective in the differential-area chamber 91 to move the valve spool 84 to the left and thereby provide a controlled connection between the exhaust passage 60 and the exhaust 92. The differential area of the lands 86 and 88, and the spring rate of the spring 90, are designed such that no more than a predetermined relatively low pressure, for example 207 KPa (30 psi), is maintained within the exhaust passage 60. However, the exhaust passage 60 is always in communication with the exhaust port 66 by way of the flow restriction 64. Thus, when the friction device 58 is disengaged, the exhaust pressure will be substantially instantaneously reduced to 207 KPa (30 psi), and will thereafter decay at a rate determined by the size of the flow restriction 64.

The pressure-responsive electrical switch 62 is a conventional pressure-sensitive switch which, when activated by the fluid pressure level in the exhaust passage 60, is effective to provide an electrical signal through an electric line 94 to actuate the solenoid in such a manner as to ensure that fluid pressure is directed to the passage 32, thereby disengaging the torque converter clutch 40. The electrical switch 62 is designed to be actuated by a fluid pressure of, for example, 34 KPa (5 psi) or greater. Thus, during initial disengagement of the friction device 58, the fluid pressure in the exhaust passage 60 will actuate the electrical switch 62, thereby causing operation of the solenoid 22 resulting in disengagement of the torque converter clutch 40. As the fluid pressure in the exhaust passage 60 decays, the required ratio interchanged will be completed, and the fluid pressure in the exhaust passage 60 will approach zero. When the fluid pressure in the exhaust passage 60 is below the threshhold level of the electrical switch 62, the electrical switch 62 will operate to cause the solenoid valve 22 to exhaust the passage 32 and pressurize the passage 30, thereby effecting re-engagement of the torque converter clutch 40.

Should the operator manually downshift the transmission, the fluid pressure in the passage 52 will operate the pressure control valve 54 in such a manner as to provide a substantially unrestricted flow connection between the exhaust port 92 and the exhaust passage 60, such that disengagement of the torque converter clutch 40 will not occur in these circumstances.

In the foregoing, the transmission control has been described as controlling a torque converter clutch, but the control is alternatively applicable to provide momentary disengagement of other forms of friction device, for instance an input clutch or a continuously engaged reaction member. The friction device 58 can be either a clutch or a brake: when used with a four-speed transmission having overdrive, such as that shown in the abovementioned US—A—3,724,292, the friction device 58 would be a brake.

## Claims

1. A transmission control for a first friction drive-establishing means (40) controlled by an electrically-operated solenoid valve (22), and a second friction drive-establishing means (58) controlled by a hydraulically-operated shift valve (46), characterized by a control valve (54) having a differential-area valve spool (84) slidably disposed in a stepped valve bore (79), a passage means (60) interconnecting the hydraulically operated shift valve (46) and the differential area (91) of the valve spool (84), a restricted exhaust (64, 66) connected to the passage means (60), and pressure-responsive electrical switch means (62) connected to the passage means (60) upstream of the restricted exhaust (64, 66) and pressure-actuable to cause the solenoid valve (22) to effect disengagement of the first friction drive-establishing means (40), the passage means (60) being effective to provide in co-operation with the valve spool (84) and the restricted exhaust (64, 66), a controlled pressure outlet for the second drive-establishing means (58) such that on disengagement of the second drive-establishing means (58) the pressure in the passage means (60) is initially increased sufficiently to actuate the switch means (62) and after a predetermined time the pressure in the passage means (60) is reduced by way of the restricted exhaust (64, 66) to permit the switch means (62) by return to an unactuated condition for re-engagement of the first friction drive-establishing means (40).

2. A transmission control according to claim 1, characterized in that the differential-area valve spool (84) of the control valve (54) is movable against a bias (90) by pressure in the passage means (60) to provide a controlled connection between the passage means (60) and an exhaust (92), and thereby limit the pressure within the passage means (60) to a predetermined value in excess of that required for actuation of the electrical switch means (62).

3. A transmission control according to claim 2, characterized in that the passage means (60) is connected to a stepped bore (79) of the control valve (54) between differential-area lands (86 and 88) of the control valve, and a manually operable valve (28) is actuable to provide manual control of the second friction drive-establishing means (58) and additionally supply a control pressure (52) to the control valve to move the valve spool (84) thereof to a position establishing a connection between the passage means (60) and exhaust (92).

4. A transmission control according to any one of claims 1 to 3, characterized in that the first and second friction drive-establishing means (40 and 58) comprise first and second friction clutches.

5. A transmission control according to any one of claims 1 to 3, characterized in that the first and second friction drive-establishing means (40 and 58) comprise a friction clutch and a friction brake respectively.

6. A transmission control according to any one of claims 1 to 3, characterized in that the first friction drive-establishing means comprises a torque converter lock-up clutch (40) and the second friction drive-establishing means comprises a friction device (58) effective to establish a transmission drive ratio.

## Patentansprüche

1. Getriebesteuerung für eine erste durch ein elektrisch betreibbares Magnetventil (22) ge-steuerte Reibantriebs-Erzeugungseinrichtung (40) und für eine zweite durch ein hydraulisch betätigbares Schaltventil (46) gesteuerte Reibantriebs-Erzeugungseinrichtung (58), gekennzeichnet durch ein Steuerventil (54) mit einem Differenzflächen-Ventilschieber (84), welcher gleitend in einer gestuften Ventilbohrung (79) angeordnet ist, durch eine das hydraulisch betätigbare Schaltventil (46) mit der Differenzfläche (91) des Ventilschiebers (84) verbindende Durchlaßeinrichtung (60), durch einen mit der Durchlaßeinrichtung (60) verbundenen verengten Auslaß (64, 66) und durch eine mit der Durchlaßeinrichtung (60) in Strömungsrichtung vor dem verengten Auslaß (64, 66) verbundenen druckempfindlichen elektrischen Schalteinrichtung (62), die, um das Magnetventil (22) zum Bewirken einer Entkupplung der ersten Reibantriebs-Erzeugungseinrichtung (40) zu bringen, druck-betätigbar ist, wobei die Durchlaßeinrichtung (60) in Zusammenarbeit mit dem Ventilschieber (84) und dem verengten Auslaß (64, 66) einen gesteuerten Druckauslaß für die zweite Antriebserzeugungseinrichtung (58) ergibt in der Weise, daß bei Entkuppeln der zweiten Antriebserzeugungseinrichtung (58) der Druck in der Durchlaßeinrichtung (60) anfangs ausreichend erhöht wird, um die Schalteinrichtung (62) zu betätigen und nach einer vorbestimmten Zeit der Druck in der Durchlaßeinrichtung (60) über den verengten Auslaß (64, 66) reduziert wird, um ein Zurückkehren der Schalteinrichtung (62) in einen unbetätigten Zustand zum Wiedereinkuppeln der ersten Reibantriebs-Erzeugungseinrichtung (40) zuzulassen.

2. Getriebesteuerung nach Anspruch 1, dadurch gekennzeichnet, daß der Differenzflächen-Ventilschieber (84) des Steuerventils (54) durch Druck in der Durchlaßeinrichtung (60) gegen eine Vorspannung (90) bewegbar ist, um eine kontrollierte Verbindung zwischen der Durchlaßeinrichtung (60) und einem Auslaß (92) zu schaffen und dadurch den Druck innerhalb der Durchlaßeinrichtung (60) auf einen vorbestimmten Wert zu begrenzen, der über dem zur Betätigung der elektrischen Schalteinrichtung (62) erforderlichen Druck liegt.

3. Getriebesteuerung nach Anspruch 2, dadurch gekennzeichnet, daß die Durchlaßeinrichtung (60) mit einer gestuften Bohrung (79) des Steuerventils (54) zwischen Differenzflächengebieten (86, 88) des Steuerventils angeschlossen ist, und daß ein von Hand betreibbares Ventil (28) zur Schaffung einer Handsteuerung der zweiten Reibantriebs-Erzeugungseinrichtung (58) und zum zusätzlichen Zuführen einen Steuerdruckes (52) zu dem Steuerventil betätigbar ist, um dessen Ventilschieber (84) in eine Stellung zu bewegen, die eine Verbindung zwischen der Durchlaßeinrichtung (60) und dem Auslaß (92) herstellt.

4. Getriebesteuerung nach einem der Ansprüche 1 bis 3, dadurch gekennzeichnet, daß die erste und die zweite Reibantriebs-Erzeugungseinrichtung (40 und 58) jeweils erste und zweite Reibkupplungen sind.

5. Getriebesteuerung nach einem der Ansprüche 1 bis 3, dadurch gekennzeichnet, daß die erste und die zweite Reibantriebs-Erzeugungseinrichtung (40, 58) jeweils eine Reibkupplung bzw. eine Reibbremse sind.

6. Getriebesteuerung nach einem der Ansprüche 1 bis 3, dadurch gekennzeichnet, daß die erste Reibantriebs-Erzeugungseinrichtung eine Drehmomentwandler-Sperrkupplung (40) und daß die zweite Reibantriebs-Erzeugungseinrichtung ein zur Errichtung eines Getriebe-Antriebsverhältnisses wirksames Reibgerät (58) ist.

**Revendications**

1. Une commande de transmission pour des premiers moyens d'établissement d'entraînement à friction (40) commandés par une soupape à électro-aimant (22) actionnée électriquement, et des deuxièmes moyens d'établissement d'entraînement à friction (58) commandés par une soupape de changement (46) actionnée hydrauliquement, caractérisée par un distributeur (54) ayant un tiroir à section différentielle (84) monté coulissant dans un alésage de distributeur échelonné (79), des moyens de passage (60) qui relient la soupape de changement (46) actionnée hydrauliquement à la section différentielle (91) du tiroir (84), un passage de décharge étranglé (64, 66) relié aux moyens de passage (60), et des moyens de commutation (60) électrique (62) répondant à la pression, reliés aux moyens de passage (60) en amont du passage de décharge étranglée (64, 66) et pouvant être actionnés par la pression pour obliger la soupape à électro-aimant (22) à provoquer la libération des premiers moyens d'établissement d'entraînement à friction (40) les moyens de passage (60) ayant pour effet de fournir, en coopération avec le tiroir (84) du distributeur et le passage de décharge étranglé (64, 66), une sortie de pression commandée pour les deuxièmes moyens d'établissement d'entraînement (58) de telle mainière que, lors de la libération des deuxièmes moyens d'établissement d'entraînement (58) la pression régnant dans les moyens de passage (60) soit initialement suffisamment augmentée pour actionner les moyens de commutation (62) et que, après un temps prédéterminé, la pression régnant dans les moyens de passage (60) soit réduite grâce au passage de décharge étranglé (64, 66) pour permettre aux moyens de commutation (62) de revenir à un état non actionné pour la remise en prise des premiers moyens d'établissement d'entraînement à friction (40).

2. Une commande de transmission selon la revendication 1, caractérisée en ce que le tiroir (84) à section différentielle du distributeur (54) peut être déplacé, à l'encontre d'une sollicitation (90) par la pression régnant dans les moyens de passage (60), pour établir une liaison commandée entre les moyens de passage (60) et un passage de décharge (92), et limiter de cette façon la pression régnant dans les moyens de passage (60) à une valeur prédéterminée supérieure à celle nécessaire pour l'actionnement des moyens de commutation électrique (62).

3. Une commande de transmission selon la revendication 2, caractérerisée en ce que les moyens de passage (60) sont reliés à une alésage échelonné (79) du distributeur (54) entre des portées (86 et 88), à section différentielle, du distributeur, et en ce qu'une soupape (28) pouvant être commandée manuellement peut être actionnée pour permettre la commande manuelle des deuxièmes moyens (58) d'établissement et d'entraînement à friction et pour transmettre additionnellement une commande de pression (52) au distributeur pour amener le tiroir (84) de ce distributeur à une position qui établit une liaison entre les moyens de passage (60) et le passage de décharge (92).

4. Une commande de transmission selon l'une quelconque des revendications 1 à 3, caractérisée en ce que les premiers et les deuxièmes moyens d'établissement d'entraînement à friction (40 et 58) comprennent un premier et un deuxième embrayages à friction.

5. Une commande de transmission selon l'une quelconque des revendications 1 à 3, caractérisée en ce que les premiers et deuxièmes moyens d'établissement d'entraînement à friction (40 et 58) comprennent respectivement un embrayage à friction et un frein à friction.

6. Une commande de transmission selon l'une quelconque des revendications 1 à 3, caractérisée en ce que les premiers moyens d'établissement d'entraînement à friction comprennent un embrayage (40) de blocage du convertisseur de couple et les deuxièmes moyens d'établissement d'entraînement à friction comprennent un dispositif à friction (58) qui peut entrer en action pour établir un rapport d'entraînement de la transmission.

CONTROL VALVE